# EUROPÄISCHE PATENTANMELDUNG

(11) **EP 0 595 022 A2**
(43) Veröffentlichungstag der Anmeldung: **04.05.1994**
(21) Anmeldenummer: 93115273.0
(22) Anmeldetag: 22.09.1993
(51) Int. Cl.: G01K 7/02, G01D 11/24

(54) **Vorrichtung zur Messwerterfassung**

(30) Priorität: 28.10.1992 DE 9214646 U
(71) Anmelder: ULTRAKUST electronic GmbH, D-94239 Gotteszell (DE)
(72) Erfinder: Böhm, Alfred, D-94234 Viechtach (DE); Wagner, Heinrich, D-94572 Schöfweg (DE)
(74) Vertreter: Heim, Hans-Karl, Dipl.-Ing.

(57) **Zusammenfassung**

Vorrichtung zur Meßwerterfassung mit einem eine Meßwerterfassungsschaltung aufnehmenden Elektronikgehäuse, einer an die Meßwerterfassungsschaltung anschließbaren externen Meßeinrichtung, wie z.B. wenigstens ein Meßfühler, und einer Stromversorgung für die Meßwerterfassungsschaltung, bei der ein Anschlußadapter für die Meßeinrichtung vorgesehen ist, über den beliebige externe Meßeinrichtungen an die Meßwerterfassungsschaltung anschließbar sind, und der Anschlußadapter ein Gehäuse aufweist, das mit dem Elektronikgehäuse lösbar fest verbindbar ist, und an einer Seite Anschlüsse für die externe Meßeinrichtung sowie an einer anderen Seite einen Steckverbindungsanschluß trägt, der mit einem dazu komplementär ausgebildeten Steckverbindungsanschluß an einer Seite des Elektronikgehäuses in stromleitenden Eingriff gelangt, wenn die beiden Gehäuse zur gegenseitigen Verbindung aneinander gekoppelt sind.

## Beschreibung

Die Erfindung betrifft eine Vorrichtung zur Meßwerterfassung mit einem eine Meßwerterfassungsschaltung aufnehmenden Elektronikgehäuse, einer an die Meßwerterfassungsschaltung anschließbaren Meßeinrichtung, wie z.B. wenigstens einen Meßfühler, und einer Stromversorgung für die Meßwerterfassungsschaltung.

Derartige Meßwerterfassungsvorrichtungen werden beispielsweise zur Prozeßtemperaturerfassung eingesetzt. Dabei handelt es sich in der Regel um mobile Gerätschaften mit einer Mehrzahl von an die Meßwerterfassungsschaltung angeschlossenen Meßfühlern und entweder einer Speicherschaltung zum Speichern der Meßwerte oder einer vorzugsweise drahtlosen Datenübertragungseinrichtung zum Übertragen der Daten an eine Auswerteeinrichtung. Im Falle einer Speicherung der Daten in der Meßwerterfassungsschaltung erfolgt die Auswertung zu einem späteren Zeitpunkt, indem die Meßwerterfassungsschaltung beispielsweise an eine Rechneranlage angeschlossen wird. Alternativ können Daten auch über Schleppkabel übertragen werden.

Herkömmliche Vorrichtungen der in Rede stehenden Art sehen einen Anschluß der externen Meßeinrichtung, beispielsweise der Temperaturfühler, an Anschlußeinrichtungen vor, die unmittelbar am die Meßwerterfassungsschaltung aufnehmenden Elektronikgehäuse angeordnet sind. Von Nachteil ist bei diesen bekannten Vorrichtungen, daß sie jeweils auf den speziellen Anwendungsfall zugeschnitten und nicht für einen universellen Einsatz ausgelegt sind, so daß von Anwendungsfall zu Anwendungsfall unterschiedlich aufgebaute Meßwerterfassungsvorrichtungen benötigt werden. Die Unterschiede beziehen sich dabei sowohl auf die Auslegung der Meßwerterfassungsschaltung wie auf die Anschlußbelegung.

Angesichts dieses Standes der Technik liegt der vorliegenden Erfindung die **Aufgabe** zugrunde, eine Vorrichtung zur Meßwerterfassung der eingangs genannten Art zu schaffen, die bei kompaktem Aufbau universell einsetzbar ist und kostengünstig hergestellt werden kann.

Gelöst wird diese Aufgabe dadurch, daß ein Meßeinrichtungsanschluß-Adapter vorgesehen ist. Erfindungsgemäß sind über diesen Adapter beliebige externe Meßeinrichtungen an die Meßwerterfassungsschaltung anschließbar. Ferner umfaßt dieser Adapter ein Gehäuse, das mit dem die Meßwerterfassungsschaltung aufnehmenden Elektronikgehäuse lösbar verbindbar ist, und das an einer Seite Anschlüsse für die externe Meßeinrichtung und an der anderen Seite Steckverbindungsanschlüsse trägt, die mit dazu komplementär ausgebildeten Steckverbindungsanschlüssen an einer Seite des Elektronikgehäuses in stromleitenden Eingriff gelangen, wenn die beiden Gehäuse zur gegenseitigen Verbindung aneinander angesetzt bzw. gekoppelt werden. Durch den Adapter ist sichergestellt, daß die in Rede stehende Meßwerterfassungsvorrichtung universell einsetzbar ist, d.h. für unterschiedliche Meßwerterfassungsvorgänge eingesetzt werden kann. Insbesondere wird durch den erfindungsgemäßen Adpater erreicht, daß für sämtlichen auftretenden Meßprobleme als Basisgerät ein und dieselbe in dem Elektronikgehäuse angeordnete Meßwerterfassungsschaltung verwendet werden kann. Die Adaption an die jeweilige Meßaufgabe erfolgt über den Adapter, der mit den entsprechenden Anschlüssen für die externe Meßeinrichtung ausgestattet ist und durch einfache Maßnahmen mit dem Elektronikgehäuse verbunden bzw. von diesem gelöst werden kann. Im wesentlichen unterscheiden sich unterschiedliche Adapter durch eine unterschiedliche Belegung der Steckverbindungsanschlüsse sowie durch eine unterschiedliche Konfiguration und Form der Anschlüsse für die externe Meßeinrichtung. Bevorzugt wird das Basisgerät der erfindungsgemäßen Meßwerterfassungvorrichtung, die im Elektronikgehäuse angeordnete Meßwerterfassungsschaltung derart ausgelegt, daß sie durch Anschluß an eine Rechnereinrichtung, beispielsweise einen PC, softwaremäßig für die jeweilige Meßaufgabe konfiguriert werden kann. Zu diesem Zweck wird das Basisgerät vor dem Feldeinsatz bzw. vor dem Einsatz vor Ort durch Anschluß an den PC über ein geeignetes Interface konfiguriert und anschließend mit dem speziellen Adapter verbunden, der seinerseits für die speziell erforderliche externe Meßeinrichtung anschlußseitig konfiguriert ist.

Die Anschlüsse für die externe Meßeinrichtung am Adaptergehäuse können als Buchsen oder alternativ hierzu als Klemmen ausgelegt sein. Wesentlich bei der erfindungsgemäßen Konzeption ist, daß die einzige Variable der Meßwerterfassungsvorrichtung durch den Adapter gebildet wird, der mit minimalem Aufwand, insbesondere ohne den Einsatz einer aktiven Schaltung an den jeweiligen Bedarf angepaßt werden kann. Das aktive Kernteil der erfindungsgemäßen Meßwerterfassungsvorrichtung wird durch den im Elektronikgehäuse untergebrachten Elektronik- bzw. Schaltungsteil gebildet, der für sämtliche Einsatzzwecke in derselben Konfiguration verwendet wird.

Vorteilhafterweise ist das Adaptergehäuse in derselben Raumform ausgeführt wie das Elektronikgehäuse, und der Anschluß der beiden Gehäuse aneinander erfolgt über im wesentlichen gleich ausgebildete Gehäuseseiten, die gegebenenfalls mit Verbindungsflanschen versehen sind, und an denen die Steckverbindungsanschlüsse vorzugsweise als männliche und weibliche Steckverbindungsanschlüsse ausgebildet sind, wobei das formschlüssige Verbinden der beiden Gehäuse einhergeht mit einer elektrischen Kontaktierung der beiden Steckverbindungen.

Die lösbare Festlegung der beiden Gehäuse aneinander kann grundsätzlich in unterschiedlichster Weise erfolgen. Bevorzugt ist eine Schraubverbindung oder eine Verbindung über Spannmittel.

Vorzugsweise ist zumindest das Elektronikgehäuse hermetisch dicht ausgebildet, wobei hermetisch dicht bedeutet, dichtend gegenüber Wasser und Druck bis z.B. 6 bar sowie gegenüber Unterdruck, der einem Hochvakuum entspricht. Je nach praktischer Auslegung, also je nach Verguß- und Dichtungssystem, können ohne weiteres auch höhere Drucke von dem Elektronikgehäuse aufgenommen werden.

Für den mobilen Einsatz der erfindungsgemäßen Meßwerterfassungsvorrichtung bzw. ihren Einsatz in Prozessen, die keine Leitungsführung von der Vorrichtung zu einer externen Stromquelle zulassen, ist im Elektronikgehäuse ein extern zugängliches Batteriefach oder Akkumulatorenfach vorgesehen, das bevorzugt dicht abgeschlossen ist gegenüber der Meßwerterfassungsschaltung. Besonders geeignet sind Lithium-Primärzellen zur Speisung der Meßwerterfassungsschaltung, da die Kapazität dieser Stromspeicher unbelastet bis zu zehn Jahren zur Verfügung steht, so daß Ruhezeiten die Einsatzbereitschaft der erfindungsgemäßen Meßwerterfassungsvorrichtung nicht beschränken. Die Spannung der Batterien oder Akkumulatoren wird zudem permanent überwacht, wobei dann, wenn während einer Messung ein Leistungsabfall unter einen zulässigen Wert auftritt, die Meßwerterfassungsschaltung automatisch in einen Wartezustand schaltet, in dem der Wartespeicherinhalt bei geringstmöglichem Strombedarf gesichert ist.

Im Falle eines Einsatzes der erfindungsgemäßen Meßwerterfassungsvorrichtung zur Temperaturmessung wird vorteilhafterweise eine thermische Kopplung der Steckverbinderanschlüsse an den beiden Gehäusen vorgesehen, und zwar zumindest im Bereich der Lötstellen dieser Anschlüsse. Vorzugsweise ist dort zudem ein Temperatursensor angeordnet, dessen Wert für die Kompensation der aktuellen Meßwerte durch die Meßwerterfassungsschaltung dient und außerdem die zulässige Grenztemperatur überwacht. In diesem Fall dienen die Verbindungsleitungen zwischen den Steckverbinderanschlüssen und den Anschlüssen für die Temperaturmeßfühler am Adapter als Ausgleichsleitungen, die aus demselben Werkstoff hergestellt sind wie die Anschlüsse für die externen Temperaturfühler sowie aus demselben Werkstoff wie die Temperaturfühler bzw. Thermoelemente selbst. Fehler durch ein Temperaturgefälle zwischen den Anschlüssen und Steckverbinderanschlüssen am Adapter werden auf diese Weise zuverlässig kompensiert.

Das Elektronikgehäuse und das Adaptergehäuse der erfindungsgemäßen Meßwertvorrichtung können grundsätzlich in unterschiedlichen Varianten realisiert sein. Beispielsweise können beide Gehäuse aus temperaturbeständigem Kunststoff bestehen. Bevorzugt ist ein Kunststoffmaterial mit einer Temperaturdauerbelastbarkeit von wenigstens 150° C und einer Spitzenbelastbarkeit von etwa 230° C. Bevorzugt ist zudem ein Kunststoffmaterial niedrigen spezifischen Gewichts. Die Meßwerterfassungsschaltung ist hierbei vorzugsweise fest eingegossen. Ein wesentlicher Aspekt bei der Verwendung von Kunststoff für das Elektronik- und das Adaptergehäuse besteht darin, daß dieser Werkstoff besonders leicht ist. Schließlich besteht ein Vorteil der aus Kunststoff gefertigten Meßwertvorrichtung darin, daß diese aufgrund ihres niedrigen Gewichts ohne weiteres auch auf Stoff- bzw. Gewebe- bzw. Fadenbahnen obenaufgelegt mitzufahren vermag.

Gemäß einer weiteren Variante können beide Gehäuse, das Elektronikgehäuse und das Adaptergehäuse aus Edelstahl hergestellt sein. Aufgrund dieses Materials ist die erfindungsgemäße Meßwerterfassungsvorrichtung auch dort einsetzbar, wo sie einer chemischen Belastung ausgesetzt ist. Zudem erlaubt dieses Gehäusematerial zumindest kurzfristig sehr hohe Spitzentemperaturen von 450° C und mehr. Ein wesentlicher Aspekt bei der Verwendung von Stahl als Material für das Elektronik- und das Adaptergehäuse besteht darin, daß dieser Werkstoff lebensmittelecht ist und außerdem gegen sämtliche organischen Lösungsmittel resistent ist.

Schließlich kann die Gehäuseanordnung der erfindungsgemäßen Meßwerterfassungsvorrichtung aus Stahl bestehen, wobei die beiden Gehäuse im Verbindungsbereich durch eine Doppelplattenkonstruktion derart ausgelegt sind, daß die Meßwerterfassungsschaltung sowie die Steckverbindungsanschlüsse beider Gehäuse leicht aus dem Basisgehäuse herausgezogen werden können, um Reparaturen an diesen Teilen oder Schaltungsmodifikationen auszuführen. Anstelle eines festen Eingusses der Meßwerterfassungsschaltung im Elektronikgehäuse sowie eines entsprechenden Eingusses der Verdrahtung im Adapter eine Schüttgutfüllung in beiden Gehäusen ist vorteilhafterweise vorgesehen, die dadurch erzielt wird, daß Schüttgut wie beispielsweise Sand oder Glaskugeln über entsprechende Füllbohrungen, die nachfolgend wieder dicht verschlossen werden, eingefüllt werden. Bevorzugt sind sowohl die Füllbohrungen für das in das Elektronikgehäuse einzubringende Füllgut, wie auch ein Batterie- oder Akkumulatorfachverschluß und ein dichtend verschließbarer Datenstecker an der Stirnseite des Elektronikgehäuses ausgebildet, die der Stirnseite mit den Steckverbindungsanschlüssen zum Adapter gegenüberliegt.

Bevorzugt wird eine Meßwerterfassungsschaltung mit Datenspeichern verwendet. Dies gestattet einen Einsatz der erfindungsgemäßen Meßwerterfassungsvorrichtung auch unter Gegebenheiten, in denen eine drahtlose Datenübertragung fehlerfrei nicht gewährleistet werden kann. Für die Meßdatenauswertung wird die Meßwerterfassungsschaltung über ein spezielles Interface an beispielsweise einen PC angeschlossen, und die Stromversorgung der Meßwerterfassungsschaltung erfolgt dann bevorzugt über ein externes Netzteil.

Nachfolgend soll die Erfindung anhand der Zeichnung näher erläutert werden. In dieser zeigen:
- Fig. 1: eine Draufsicht auf eine erste Ausführungsform der erfindungsgemäßen Vorrichtung zur Meßwerterfassung, bei dem die erfindungsgemäß vorgesehenen beiden Gehäuse, von denen jeweils ein Deckel abgenommen ist, voneinander entkoppelt sind;
- Fig. 2: eine Seitenansicht der Vorrichtung von Figur 1;
- Fig. 3: eine Variante der Vorrichtung von Fig. 1 mit aneinander angekoppelten Elektronik- und Adaptergehäusen, jeweils mit nichtmontiertem Deckel;
- Fig. 4: eine Draufsicht auf eine weitere Ausführungsform der erfindungsgemäßen Vorrichtung zur Meßwerterfassung mit abgewandelter Verbindungseinrichtung für die beiden Gehäuse;
- Fig. 5: eine Seitenansicht der Vorrichtung von Fig. 4;
- Fig. 6: eine Detailansicht des Adapters der Vorrichtung von Fig. 4 in Draufsicht bei entferntem Gehäusedeckel;
- Fig. 7: eine abgewandelte Ausführungsform des Elektronikgehäuseteils der erfindungsgemäßen Vorrichtung zur Meßwerterfassung und
- Fig. 8: eine typische Auswerteanordnung für die erfindungsgemäße Meßwerterfassungsvorrichtung.

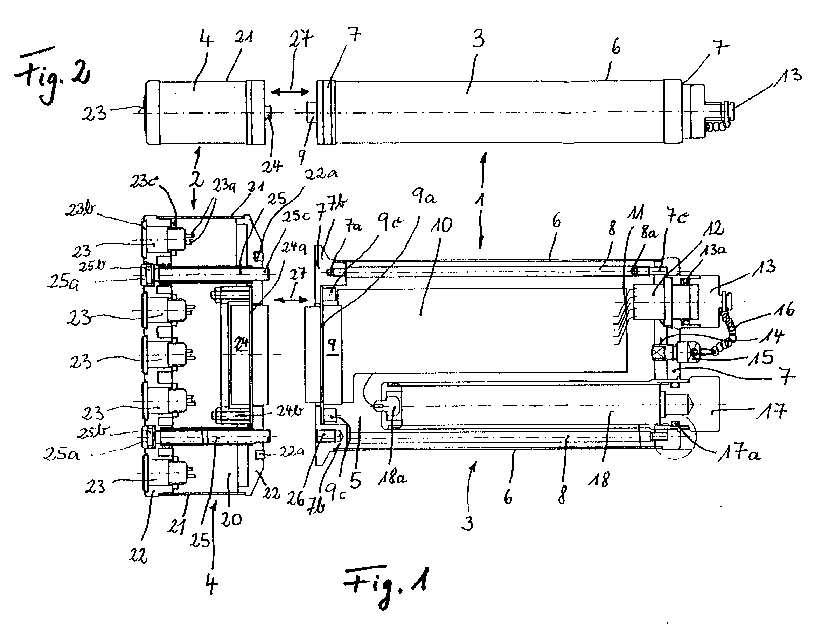

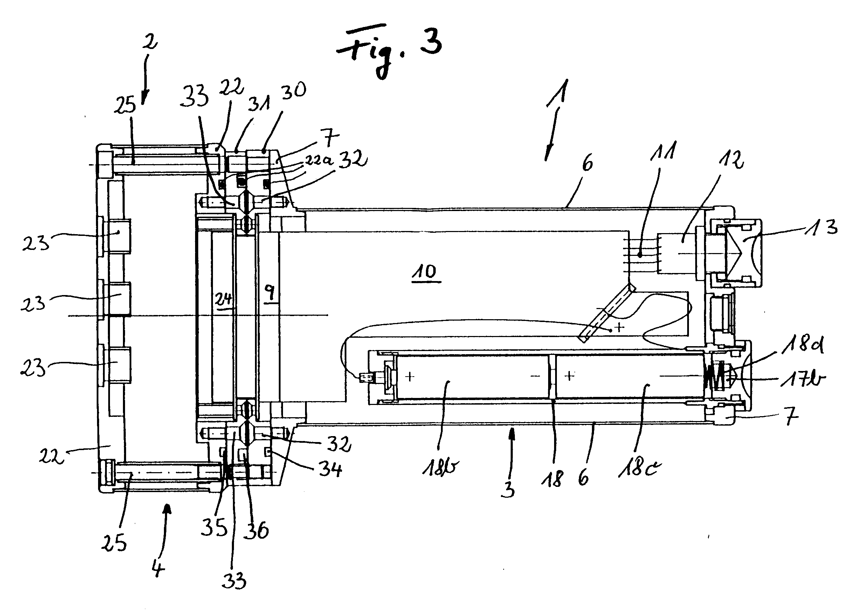

Die in Figur 1 in Draufsicht und in Figur 2 in Seitenaufrißansicht gezeigte erfindungsgemäße Vorrichtung zur Meßwerterfassung ist zweiteilig ausgebildet und umfaßt einen Meßwerterfassungs- und Speicherteil 1 und einen Anschlußadapter 2. Beide Vorrichtungsteile 1 und 2 umfassen jeweils ein Flachgehäuse. Beide flache, quaderförmigen Gehäuse, das Elektronikgehäuse 3 und das Adaptergehäuse 4, bestehen bevorzugt entweder aus einem wärmefesten Kunststoff oder aus Edelstahl.

Das Elektronikgehäuse 3 umfaßt eine Bodenplatte 5, eine parallel zu dieser verlaufende, nicht dargestellte Deckenplatte sowie zwei zueinander parallel verlaufende Seitenwände oder Seitenplatten 6 und zwei Stirnplatten oder Stirnwände 7. Die Stirnwände 7 sind aus einem stärkeren Material als die übrigen Wandteile ausgebildet, und zwar bevorzugt als Gußformteile, die über vier Verbindungsstangen 8 miteinander verbunden sind, die jeweils paarweise im unmittelbaren Bereich der Seitenwände 6 angeordnet sind sowie parallel zur Längsmittelachse des Elektronikgehäuses 3 verlaufen. Die Verbindungsstangen 8 bilden zusammen mit den profilierten Seitenwänden 7 einen Stützaufbau bzw. ein Chassis für das Elektronikgehäuse 3. Die Verbindungsstangen 8 sind mit den beiden Seitenwänden 7 verschraubt. Zu diesem Zweck weisen die Stangen 8 am einen Ende Gewindeansätze auf, mit denen die Stangen 8 in Gewinde 7a eingeschraubt sind, die in einem verstärkten Profilabschnitt 7b der Seitenwand 7 ausgebildet sind, die zum Anschluß des Adaptergehäuses 4 ausgebildet ist. Am anderen Ende weisen die Verbindungsstangen 8 Gewindebohrungen oder Innengewinde 8a auf, in die Gewindebolzen 7c eingreifen, die fest in der anderen Wand 7 in dort vorgesehenen Bohrungen eingesetzt sind.

Alternativ zu dem vorstehend ausgeführten kann das Gehäuse 3 auch aus zwei Halbschalen zu einem flachen Rohr verschweißt werden, wobei die beiden Stirnseiten 7 aufgepreßt und mit den Halbschalen verschweißt werden. Messingstangen halten dabei vor dem Schweißen die Einzelteile zusammen. Bei der Ausführung des Gehäuses 3 als Kunststoffgehäuse wird lediglich die flachsteckerseitige Front (Flachsteckbuchse 9) aufgepreßt, während der übrige Gehäuseteil als flacher Topf einstückig hergestellt ist, wodurch die Gehäuseherstellung leicht und billig ist.

Die Seitenwand 7 zum Anschluß des Adaptergehäuses 4 weist eine zentrale Ausnehmung auf, in die eine Flachsteckbuchse 9 eingesetzt ist. Die Flachsteckbuchse 9 ist mit einem quer zur Steckrichtung verlaufenden Anschlußflansch bzw. einer Anschlußplatte 9a ausgebildet, deren Abmessungen diejenige der Ausnehmung in der Seitenwand 7 übertreffen, und die an ihren seitlichen Enden Bohrungen aufweist, die von Schrauben 9c durchsetzt sind, die in Gewindebohrungen der Seitenwand 7 eingreifen. Die Flachsteckbuchse 9 ist mit ihrer Platte 9a von der Innenseite an die Wand 7 angesetzt und auf eine Platine 10 mit nicht dargestellten Steckstiften aufgelötet, auf der eine nicht dargestellte Meßwerterfassungsschaltung aufgebaut ist. Die Platine 10 erstreckt sich zwischen den beiden Seitenwänden 7 und steht an ihrem dem Flachsteckbuchsenteil 9 gegenüberliegenden Ende über Drahtanschlüsse 11 in Verbindung mit einer Datensteckbuchse 12 beispielsweise kreisförmigen Querschnitts, die in eine entsprechende Ausnehmung der Seiten- oder Rückwand 7 eingesetzt ist. Die Buchse 12, die alternativ auch als Steckerteil ausgebildet sein kann, ist im dargestellten Ausführungsbeispiel durch einen Deckel 13 verschlossen, der ein Außengewinde aufweist, mit dem er in ein Innengewinde des Buchsenteils 12 eingeschraubt ist. Zwischen der innenliegenden ringförmigen Stirnfläche des Deckels 13 und einer im Buchsenteil 12 ausgebildeten Schulter ist ein Dichtring, vorzugsweise ein O-Dichtring 13a angeordnet, um einen dichten Abschluß des Buchsenteils 12 durch den Deckel 13 zu gewährleisten.

Ferner ist in der Rückwand 7 bzw. der rückwärtigen Stirnwand ein Durchbruch 14 ausgebildet, und zwar in Gestalt einer Gewindebohrung, durch den das Elektronikgehäuse 3 mit Füllgut, wie beispielsweise Glaskugeln befüllt werden kann, nachdem alle Komponenten im Elektronikgehäuse 3 angeordnet sind. Die Bohrung 14 wird nach dem Befüllen mit dem Füllgut, wie im dargestellten Ausführungsbeispiel gezeigt, durch ein Verschlußelement 15 verschlossen, das zapfenartig ausgebildet ist und einen vornegelegenen Gewindebolzen aufweist, mit dem das Verschlußelement in die Gewindebohrung 14 einschraubbar ist. Auch ist ein außenliegendes Kopfteil, an das eine Kette 16 angeschlossen ist, vorhanden, die andererseits fest verbunden ist mit dem Deckel 13, um die beiden Teile 13 und 15 unverlierbar miteinander zu verbinden. Zwischen Gewindeabschnitt und Kopfteil des Verschlußteils 15 ist zum dichtenden Verschluß der Bohrung 14 ein Dichtelement, beispielsweise in Gestalt eines O-Rings eingesetzt.

Die Rück- oder rückwärtige Stirnwand 7 weist darüberhinaus einen weiteren kreisförmigen Druchbruch auf, in den ein Batteriefachdeckel 17 dichtend einsetzbar ist. Der Deckel 17 ist hohlzylindrisch ausgebildet und weist im Bereich seines einen offenen Endes ein Außengewinde auf, mit dem er in ein Innengewinde in der kreisförmigen Bohrung der Stirnwand 7 einsetzbar ist. Für eine Abdichtung sorgt wiederum ein O-Ring 17a, der in eine Ringnut des zylindrischen Deckels 17 eingesetzt ist und sich gegen eine ringförmige Dichtfläche in der Wand 7 abstützt.

Durch Herausschrauben des Deckels 17 aus dem Elektronikgehäuse 3 wird ein in ihm vorgesehenes Batteriefach 18 zugänglich, das parallel zur Längsmittenachse des Gehäuses 3 verläuft und neben der Platine 10 liegt. Das Batteriefach ist gegenüber dem Innenraum des Gehäuses 3 abgedichtet ausgebildet und umfaßt am innenliegenden Ende einen Kontaktteil 18a, der in Verbindung steht mit der Schaltung auf der Platine 10. Der andere, vorzugsweise Massekontakt des Batteriefachs 18 ist im Deckelteil 17 ausgebildet, der beispielsweise über das Gehäuse 3 galvanisch leitend in Verbindung steht mit dem Masseanschluß der Schaltung auf der Platine 10.

Das Elektronikgehäuse 3 ist hermetisch dicht ausgebildet. Zu diesem Zweck sind die einzelnen Wandteile des Gehäuses 3 beispielsweise miteinander elektronisch verschweißt. Sonstige Abdichtmaßnahmen, wie beispielsweise Stecker und Buchsenteile gegenüber dem Gehäuse, basieren bevorzugt auf der Grundlage von O-Ringen. Bevorzugt sind das Adaptergehäuse 4 und das Elektronikgehäuse 3 in sich dicht ausgebildet. Die dichte Ausbildung umfaßt dabei jedoch nicht die Flachstecker- und Buchsenteile 9,24. Diese Teile werden vielmehr von einem O-Ring oder einem ähnlichen Dichtelement abgedichtet, wenn die Gehäuse 3 und 4 durch die Schrauben 25 oder wie nachfolgend noch dargestellt, durch einen Haken 40 aneinandergepreßt werden. Zu diesem Zweck liegt auch um den Schraubenkopf 25a herum ein O-Ring in einer hierfür vorgesehenen Nut 25b. Der O-Ring 22a zur Abdichtung der Buchsen bzw. Stecker 9,24 ist in einer Nut angeordnet, die in der Adaptergehäusewandung 22 ausgebildet ist.

Das Adaptergehäuse 4 umfaßt ebenfalls einen Boden 20 sowie eine diesem gegenüberliegende nicht dargestellte Decke, zwei einander gegenüberliegende parallel verlaufende Seitenwände 21 sowie zwei Stirnwandteile 22, die wiederum in Gestalt von Profilen ausgebildet sind. Im dargestellten Ausführungsbeispiel ist das Adaptergehäuse 4 nicht in sich dicht ausgebildet, weshalb die Seitenwände 21 mit den Stirnwänden 22 beispielsweise durch einfach Verschraubungsmaßnahmen verbunden sein können.

Die stets freiliegende, bzw. vom Elektronikgehäuse 3 abgewandte Stirnseite 22 des Adaptergehäuses 4 ist mit einer Vielzahl, im dargestellten Ausführungsbeispiel mit fünf Steckbuchsenteilen 23 versehen. Die Steckbuchsenteile 23 sind beispielsweise von zylindrischer Konfiguration und enthalten jeweils ein Kontaktpaar, das auf der Rückseite, bzw. der in dem Gehäuse 4 liegenden Seite der Buchsen 23 herausgeführt ist. Die Kontaktpaare 23a sind über elektrische Leitungen mit einem Flachsteckerteil 24 verbunden, das an der gegenüberliegenden Stirnwand 22 vorgesehen ist. Im dargestellten Ausführungsbeispiel ist die Verankerung der Anschlußbuchsen 23 in der Stirnwand 22 dadurch bewirkt, daß an ihren außenliegenden Enden Flansche 23b ausgebildet sind, die einen größeren Durchmesser aufweisen als die Buchsenaufnahmebohrungen in der Stirnwand 22, und am innenliegenden Endabschnitt sind die Buchsenteile 23 mit einem Außengewinde versehen, auf dem jeweils eine Überwurfmutter 23c sitzt. Durch Anziehen der Überwurfmutter 23c erfolgt in Zusammenwirken mit dem Flansch 23b eine Verspannung der Buchsenteile 23 in den Aufnahmeöffnungen der Stirnwand 22.

Das in der dem Elektronikgehäuse 3 zugewandten Stirnwand 22 eingesetzte Flachsteckerteil 24 ist als komplementäres Steckverbinderelement zu dem Flachsteckbuchsenteil 9 ausgebildet und im wesentlichen wie dieses konfiguriert, nämlich unter anderem mit einen Trageflansch 24a, über das der Steckerteil 24 mittels Schraubmittel 24b mit der Stirnwand 22 verbunden ist.

Zur Verbindung der Gehäuse 3 und 4 miteinander dient ein Schraubverbindungsmittel, das zwei Gewindebolzen 25 umfaßt, die im Adaptergehäuse 4 drehbar gelagert sind, und deren Köpfe 25a die außengelegene Stirnwand 22 zwischen zwei Anschlußbuchsen 23 durchsetzen, während ihre mit Gewinde versehenen Enden 23c von der dem Elektronikgehäuse gegenüberliegenden Stirnwand 22 überstehen und in Gewindebohrungen 26 einzugreifen vermögen, die in dem flanschartig ausgebildeten Verdickungsteil 7b der Stirnwand 7 des Gehäuses 3 eingelassen sind.

Wie durch den Doppelpfeil 27 in den Figuren 1 und 2 dargestellt, erfolgt die Ankopplung des Adaptergehäuses 4 am Elektronikgehäuse 3 dadurch, daß diese beiden Gehäuse in Richtung ihrer Mittenlängsachsen aufeinander zubewegt werden, wobei in der letzten Phase dieser Relativbewegung die beiden Flachsteckverbinderanschlüsse 9 und 24 ineinander eingreifen, die mit ihren Verbindungsabschnitten jeweils über die Stirnwandungen 9 bzw. 22 über die jeweiligen Gehäuse vorstehen, und im wesentlichen gleichzeitig gelangen die Verbindungsschrauben 25 in Eingriff mit den im Gehäuse 3 ausgebildeten Innengewinden 26. Durch ein Anziehen der Schrauben 25 über ihre Kopfenden 25a mittels eines geeigneten Werkzeuges läßt sich das Adaptergehäuse 4 mechanisch fest mit dem Elektronikgehäuse 3 verspannen, wodurch eine Gehäuseeinheit geschaffen wird.

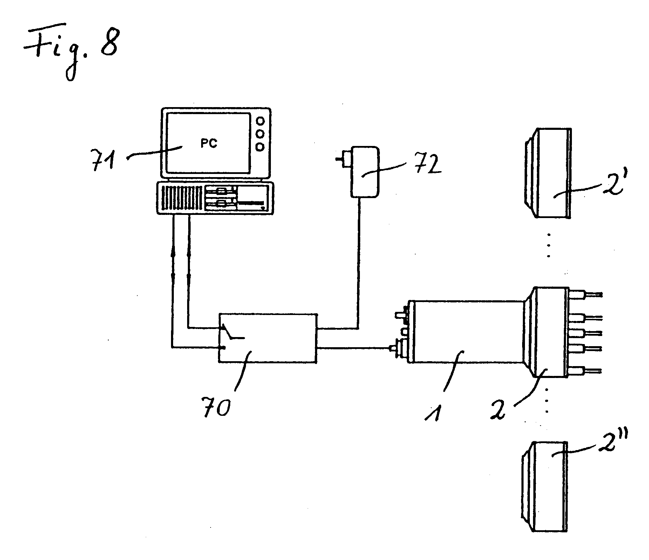

Ein wesentlicher Aspekt der Erfindung besteht darin, daß eine vielseitig variable Meßwerterfassungsvorrichtung dadurch geschaffen wird , daß stets der Elektronikteil 1 identisch beibehalten wird, während an das Gehäuse 3 des Elektronikteils 1 für den speziellen Anwendungsfall konfigurierte Adapter 2 angeschlossen werden, die durch identische Gehäuse 4 gekennzeichnet sind, in die an die jeweilige externe Meßeinrichtung angepaßte Anschlußteile, wie Anschlußbuchsen 23 eingesetzt sind, die gegebenenfalls in der erforderlichen Weise verbunden sind mit dem Flachsteckverbindungsanschluß 24, der jedoch an sich nicht ausgetauscht werden muß, um die Konfiguration mit Bezug auf den Anschluß externer Meßeinrichtungen zu ändern. Der Elektronikteil 1 wird an unterschiedliche Meßaufgaben dadurch anpaßbar, daß er über den Datenstecker 12 unter Zwischenschaltung eines Interfaces 70 an einen PC (71) angeschlossen wird, durch den die auf der Platine 10 aufgebaute Schaltung jeweils softwaremäßig konfiguriert wird (siehe Fig. 8). Wie aus Fig. 8 ferner hervorgeht, ist die Schaltung des Elektronikteils 1 während des Konfigurierungsvorgangs an ein Steckernetzteil 72 angeschlossen, das bei diesem Vorgang die interne Batterie ersetzt, um diese nicht unnötig zu belasten. In Fig. 8 sind außerdem zwei weitere Adapterteile 2' und 2'' dargestellt, die ersatzweise an den Elektronikteil 1 anstelle des Adapters 2 anschließbar sind und mit Bezug auf die Anschlüsse für die externe Meßeinrichtung unterschiedlich konfiguriert sind.

Ausgehend von der in den Figuren 1 und 2 dargestellten Ausführungsformen der erfindungsgemäßen Meßwerterfassungsvorrichtung ist in Fig. 3 eine abgewandelte Vorrichtung dargestellt, wobei gleiche Teile mit den gleichen Bezugszeichen versehen sind. Nachfolgend sollen wegen der weitgehenden Übereinstimmung der in Fig. 3 gezeigten Vorrichtung mit der vorausstehend beschriebenen Vorrichtung lediglich unterschiedlich gestaltete Elemente näher beschrieben werden.

In das Batteriefach 18 sind zwei Batterien 18b und 18c eingesetzt, die parallel geschaltet und von einer Feder 18d in Längsrichtung beaufschlagt sind, die in einer Aussparung 17b des Batteriefachdeckels 17 sitzt und die Rückseite der am weitesten außengelegenen Batterie 18c beaufschlagt. Zur optimalen Masseverbindung ist der leitend ausgebildete Gehäusedeckel 17 über eine eigene Leitung an die auf der Platine 10 ausgebildete Schaltung angeschlossen.

Zwischen den einander gegenüberliegenden Stirnwänden 7 und 22 der beiden Gehäuse 3 und 4 sind zwei Zwischenplatten 30 und 31 eingesetzt. Die elektronikgehäuseseitige Platte 30 ist über Senkkopfschrauben 32 fest verbunden mit der Stirnwand 7 des Elektronikgehäuses 3, das zu diesem Zweck entsprechende Gewindebohrungen aufweist. In derselben Weise ist die andere bzw. adapterseitige Platte 31 fest verbunden über Schrauben 33 mit der Stirnwand 22 des Adaptergehäuses 4. Auch diese Schrauben sind als Senkkopfschrauben ausgelegt und liegen in einer Achse mit den anderen Senkkopfschrauben 32. Eine hermetisch dichte Verbindung der Zwischenplatte 30 mit der Stirnwand 7 wird durch einen O-Ring 34 geschaffen, der in einer Ringnut der Platte 30 sitzt, aus dieser übersteht und im dichtenden Eingriff mit der Wand 7 steht. In ähnlicher Weise ist ein O-Ring 35 zwischen der Platte 31 und der Stirnwand 22 des Adaptergehäuses 4 angeordnet und zwar in einer Ringnut der Stirnwand 22. Zwischen den beiden Platten 30 und 31 ist noch ein weiterer O-Ring 36 angeordnet, der in einer Ringnut der Platte 31 liegt. Aufgrund dieser O-Ring-Anordnung ist zum einen gewährleistet, daß das Elektronikgehäuse 3 hermetisch dicht abgedichtet ist sowie zum anderen, daß bei einer entsprechenden hermetisch dichten Ausbildung des Adaptergehäuses 4 auch die elektrische Verbindung in Gestalt der Flachstecker und Flachbuchsen 9 sowie 24 von der Umgebung hermetisch abgedichtet ist.

Eine Besonderheit der Zwischenplattenanordnung von Fig. 3 besteht darin, daß im Gegensatz zu dem vorstehend abgehandelen Ausführungsbeispiel der erfindungsgemäßen Vorrichtung der Flachsteckverbinderteil 24 nicht in die Stirnwand 22, sondern in die Zwischenplatte 31 eingesetzt ist, während andererseits die gegenüberliegende Flachsteckverbindungseinrichtung 9 in eine entsprechende Ausnehmung der anderen Zwischenplatte 30 eingesetzt ist. Diese Anordnung hat den Vorteil, daß zum einen der Steckverbindungsanschluß 24 in einfacher Weise durch Lösen der Schrauben 33 vom Adaptergehäuse 4 getrennt werden kann, während andererseits der Verbindungsanschluß 9 zusammen mit der Platine 10 in ähnlich einfacher Weise aus dem Elektronikgehäuse 3 entfernt werden kann, wenn dies gewünscht ist.

Ebenfalls in Abweichung von dem vorausstehend beschriebenen Ausführungsbeispiel der erfindungsgemäßen Meßwerterfassungsvorrichtung greifen die Verbindungsschrauben 25, welche die adaptergehäuseseitige Zwischenplatte 31 durchsetzen, nicht in Gewindebohrungen in der Stirnwand 7 des Elektronikgehäuses 3, sondern in entsprechende Gewindebohrungen der elektronikgehäuseseitigen Zwischenplatte 30 ein.

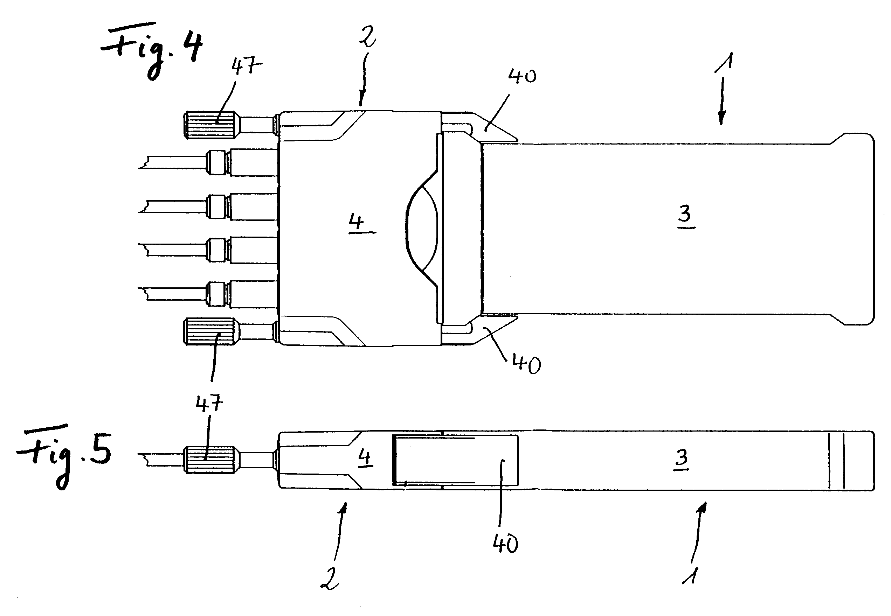

Eine weitere Abwandlung der erfindungsgemäßen Meßwerterfassungsvorrichtung ist in den Figuren 4 bis 6 gezeigt. Die Abwandlung betrifft im wesentlichen die Verbindungsmittel zum Verbinden der beiden Gehäuse 3 und 4, weshalb ausschließlich nachfolgend diese Verbindungsmittel näher beschrieben werden.

Die Verbindungsmittel umfassen beidseits am Adaptergehäuse 4 angeordnete hakenartige Spannorgane 40, die in Ausnehmungen auf der Rückseite des flanschartigen seitlich vorstehenden Fortsatzes 7b am Elektronikgehäuse 3 eingreifen und die beiden Gehäuse 3 und 4 miteinander verspannen. Im einzelnen sind die Haken 40 um einen senkrecht zur Bodenplatte 20 stehenden Zapfen 41 schwenkbar gelagert. Der Zapfen 41 ist fest verbunden mit einer Hülse 42, die gleitend in einem Kanal 43 des Gehäuses 4 gelagert ist. Die Hülse 42 weist ein Innengewinde 44 auf, in dem das Außengewinde eines Kolbens 45 läuft, der über eine Kolbenstange oder einen Bolzen 43 fest mit einem externen Zylinderteil 47 verbunden ist, der an seiner freien Stirnfläche einen Eingriffsschlitz 48 für einen Schraubenzieher aufweist und mit der gegenüberliegenden ringförmigen Stirnfläche 49 an einem gehäusefesten Anschlag 50 ansteht. Auf der Kolbenstange 46 sitzt eine Druckfeder 51, die sich einerseits am Anschlag 50 und andererseits am Kolben 45 abstützt. Auf dem Zapfen 41 sitzt eine Feder 52, die das hakenförmige Spannorgan 40 quer zur Längsachse nach außen verspannt, die die Hülse 42, den Kolben 45 und die Kolbenstange 46 durchsetzt.

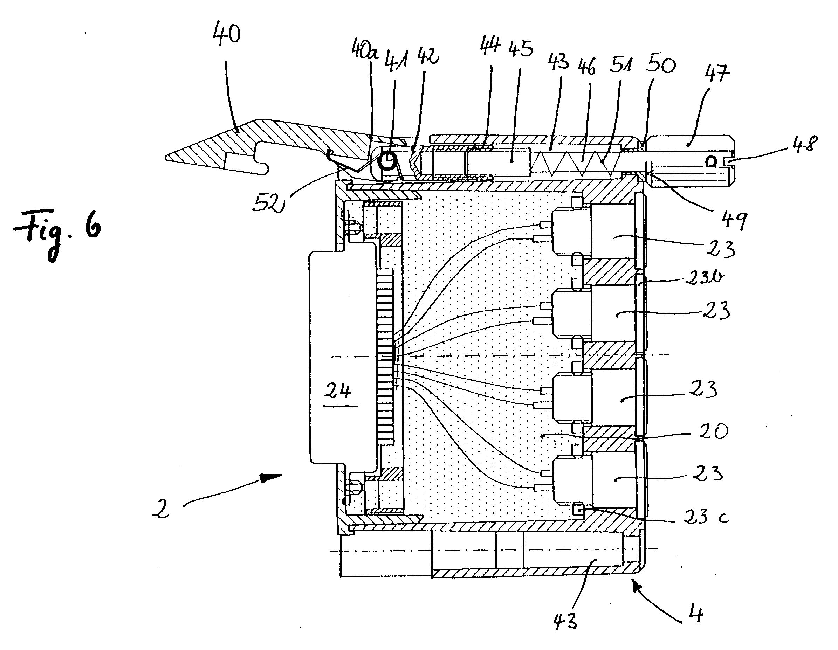

Bei nach außen stehenden kolbenförmigen Spannorganen 40 (entsprechend der Position von Fig. 6) läßt sich das Adaptergehäuse 4 mit seinem Flachsteckerteil problemlos auf das Flachsteckerteil des gegenüber angeordneten Elektronikgehäuses aufstecken, bis die beiden Gehäuse in Anschlagberührung zueinander stehen, woraufhin die Verbindungseinrichtung verspannt wird, indem durch Einsetzen eines Schraubenziehers in den Schlitz 48 und Hineindrehen des Kolbens 45 in die Hülse bzw. den Zylinder 42 das hakenförmige Spannorgan 40 in Richtung auf das Adpatergehäuse 4 zurückgezogen und dabei die Angriffsfläche am Flansch 7b hintergreifend nach innen geschwenkt wird. Hierbei wird das hakenartige Spannorgan mit seinem an den Zapfen 41 angelenkten Abschnitt 40a in den Kanal 46 hineingezogen, dessen Wandung parallel zu der den Kolben und die Kolbenstange durchsetzenden Längsachse verläuft.

Dieselbe Spannorgan-Anordnung befindet sich im Randbereich der anderen Seitenwand 22 des Adaptergehäuses 4 und wird in derselben Weise betätigt wie das vorstehend beschriebene Spannorgan 40.

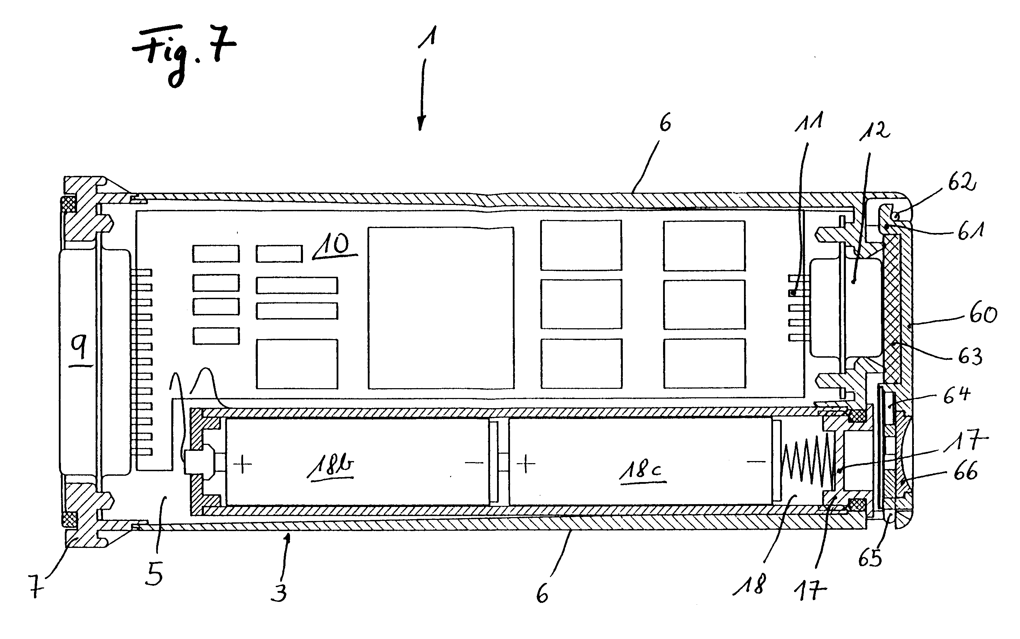

Figur 7 zeigt eine abgewandelte Ausbildung des Elektronikgehäuses 3. Ausgehend von der Ausführungsform des Elektronikgehäuses 3 von Figur 1 besteht ein wesentliches abgewandeltes Detail in einer Schutz- bzw. Verschlußplatte 60, die an der Stirnwand 7 des Elektronikgehäuses 3 schwenkbar angelenkt ist, welche den Datenstecker 12 und den Verschlußdeckel 17 für das Batteriefach 18 trägt. Die Verschlußplatte 60 ist als flacher Deckel ausgelegt, der im wesentlichen rechteckig ausgebildet und an einer Schmalseite eine Abbiegung 61 umfaßt, mit der die Platte 60 um eine Welle 62 schwenkbar ist, die in der Boden- und Deckenplatte des Gehäuses ruht. In der Verschlußplatte 60 ist ein Kissen 63 aus einem gummi-elastischen, temperaturbeständigen Werkstoff eingelassen, der auf den Datenstecker 12 drückt und diesen abdichtet, wenn die Platte 60 in ihre Schließstellung am Gehäuse 6 geschwenkt ist.

Der Verschluß für den Deckel bzw. die Platte 60 ist als eine Klinken-/Schnapp-Anordnung 64,65,66 ausgebildet, die einen Betätigungsdrehknopf 66 aufweist, der über dem Batterieverschlußdeckel 17 drehbar angeordnet ist und die Klinke 64 betätigt, die durch Drehung des Knopfes 66 aus der ihr zugeordneten Barriere zurückgezogen werden kann, um den Deckel 60 in seine Öffnungslage zu verschwenken. Der Drehknopf 66 wird durch die Klinke und den Deckel 60 gehaltert.

Alternativ zu der vorstehend angeführten Ausführung des Adaptergehäuses kann dieses auch so gestaltet sein, daß anstelle der Anschlußstecker in einer Gehäusestirnwand für externe Meßgeräte dort Öffnungen ausgebildet sind, über die Anschlußklemmen zugänglich sind, die auf einer Schublade montiert sind, welche verschiebbar im Adaptergehäuse gelagert ist und aus diesem herausgezogen werden kann, um die Anschlußklemmen zugänglich zu machen, ohne daß dieses Gehäuse geöffnet werden muß.

## Patentansprüche

1. Vorrichtung zur Meßwerterfassung mit einem eine Meßwerterfassungsschaltung aufnehmenden Elektronikgehäuse, einer an die Meßwerterfassungsschaltung anschließbaren externen Meßeinrichtung, wie z.B. wenigstens ein Meßfühler, und einer Stromversorgung für die Meßwerterfassungsschaltung,
dadurch **gekennzeichnet**,
daß ein Anschlußadapter (2) für die Meßeinrichtung vorgesehen ist, über den beliebige externe Meßeinrichtungen an die Meßwerterfassungsschaltung anschließbar sind, daß der Anschlußadapter (2) ein Gehäuse (4) aufweist, das mit dem Elektronikgehäuse (3) lösbar fest verbindbar ist, und an einer Seite Anschlüsse (23) für die externe Meßeinrichtung sowie an einer anderen Seite einen Steckverbindungsanschluß (24) trägt, der mit einem dazu komplementär ausgebildeten Steckverbindungsanschluß (9) an einer Seite des Elektronikgehäuses (3) in stromleitenden Eingriff gelangt, wenn die beiden Gehäuse (3, 4) zur gegenseitigen Verbindung aneinander gekoppelt sind.

2. Vorrichtung nach Anspruch 1,
dadurch **gekennzeichnet**,
daß die Anschlüsse (23) für die externe Meßeinrichtung und der Steckverbindungsanschluß (24) an einander gegenüberliegenden Stirnwänden (22) des Adaptergehäuses (4) angeordnet sind.

3. Vorrichtung nach Anspruch 1 oder 2,
dadurch **gekennzeichnet**,
daß beide Gehäuse (3, 4) im wesentlichen dieselbe Gestalt aufweisen und im aneinandergesetzten Zustand ein einheitliches Gehäuse bilden, und daß die Gehäuse (3, 4) allgemein quaderförmig als Flachgehäuse ausgebildet sind.

4. Vorrichtung nach einem der Ansprüche 1 bis 3,
dadurch **gekennzeichnet**,
daß eine Verbindungseinrichtung (25, 26) für die beiden Gehäuse (3, 4) vorgesehen ist, die im Adaptergehäuse (4) drehbar gelagerte Schrauben (25) umfaßt, und
daß die im Adaptergehäuse (4) gelagerten Schrauben (25) in im Elektronikgehäuse (3) angeordnete Gewinde (36) eingreifen.

5. Vorrichtung nach Anspruch 4,
dadurch **gekennzeichnet**,
daß die Verbindungseinrichtung am Adaptergehäuse vorgesehene Spannmittel (40 - 52) mit hakenförmigen Spannorganen (40) aufweist, die kraft- oder formschlüssig in Widerlager am Elektronikgehäuse (3) eingreifen.

6. Vorrichtung nach einem der Ansprüche 1 bis 5,
dadurch **gekennzeichnet**,
daß die Steckverbinderanschlüsse (9, 24) an den beiden Gehäusen (3, 4) als zueinander komplementäre Flachstecker und Flachsteckbuchsen ausgebildet sind, und daß die Steckverbinderanschlüsse (7, 24) an beiden Gehäusen (3, 4) thermisch miteinander gekoppelt sind.

7. Vorrichtung nach einem der Ansprüche 1 bis 6,
dadurch **gekennzeichnet**,
daß das Elektronikgehäuse (3) ein Batteriefach (18) bzw. ein Akkumulatorfach aufweist, das über einen mit einem Verschlußmittel (17) vorzugsweise dicht verschließbaren Durchbruch in der Wandung (7) des Elektronikgehäuses (3) zugänglich ist, und daß die Meßwerterfassungschaltung fest in das Elektronikgehäuse (3) eingegossen ist.

8. Vorrichtung nach einem der Ansprüche 1 bis 9,
dadurch **gekennzeichnet**,
daß in die Wandung (7) des Elektronikgehäuses (3) ein mit der Meßwerterfassungsschaltung verbundener, vorzugsweise mit einem Verschlußmittel (13) verschließbarer Datensteckanschluß (12) eingesetzt ist, und daß der Zugang zum Batteriefach (18) und der Datensteckanschluß (12) an der Stirnwand des Elektronikgehäuses (3) angeordnet sind, die der Stirnwand (7) mit dem Steckverbinderanschluß (9) gegenüberliegt.

9. Vorrichtung nach einem der Ansprüche 1 bis 8,
dadurch **gekennzeichnet**,
daß die beiden Gehäuse (3, 4), zumindest aber das Elektronikgehäuse (3), mit Schüttgut aus isolierendem Material, wie z.B. Sand oder Glaskugeln, gefüllt sind, und
daß die Gehäuse (3,4) aus Stahl, Edelstahl oder aus temperaturbeständigem Kunststoff bestehen.

10. Vorrichtung nach einem der Ansprüche 1 bis 9,
dadurch **gekennzeichnet**,
daß das Elektronikgehäuse (3) und gegebenenfalls das Adaptergehäuse (4) dicht, vor allem hermetisch dicht ausgebildet und gegebenenfalls über eine Dichtungseinrichtung dicht miteinander verbunden sind, und daß die jeweils am Adaptergehäuse (4) vorgesehenen Anschlüsse (23) für die externe Meßeinrichtung sowie der Steckverbinderanschluß (24) an diesem Gehäuse frei miteinander verdrahtet sind.
